# EUROPÄISCHE PATENTSCHRIFT

(11) **EP 2 441 984 B1**
(45) Veröffentlichungstag und Bekanntmachung des Hinweises auf die Patenterteilung: **04.12.2019**
(21) Anmeldenummer: 11008047.0
(22) Anmeldetag: 05.10.2011
(51) Int. Cl.: F16H 59/14, F16H 61/02, G01M 15/04

(54) **OPTIMIERUNGEN BEI DER ANSTEUERUNG EINES AUTOMATISIERTEN GETRIEBES, INSBESONDERE EINES AUTOMATISIERTEN GETRIEBES EINES NUTZFAHRZEUGES**
OPTIMISATION OF THE CONTROL OF AN AUTOMATED TRANSMISSION SYSTEM, IN PARTICULAR OF AN AUTOMATED TRANSMISSION SYSTEM OF A COMMERCIAL VEHICLE
OPTIMISATION LORS DE LA COMMANDE D'UNE BOÎTE DE VITESSES AUTOMATISEÉ, NOTAMMENT D'UNE BOÎTE DE VITESSES AUTOMATISEÉ D'UN VÉHICULE UTILITAIRE

(30) Priorität: 12.10.2010 DE 102010048216
(43) Veröffentlichungstag der Anmeldung: 18.04.2012
(73) Patentinhaber: MAN Truck & Bus SE, 80995 München (DE)
(72) Erfinder: Hudelmaier, Wolfgang, 81247 München (DE); Zieglmaier, Wolfgang, 85540 Haar (DE); Hellberg, Claus, 85229 Markt Indersdorf (DE); Weiner, Martin, 83624 Otterfing (DE); Greppmeier, Georg, 85305 Jetzendorf (DE); Huber, Maximilian, 81739 München (DE)
(74) Vertreter: Liebl, Thomas

(56) Entgegenhaltungen:
- EP-A2- 0 340 206
- DE-A1-102008 054 802

## Beschreibung

Die Erfindung betrifft ein Verfahren zur Ansteuerung eines automatisierten Getriebes, insbesondere eines automatisierten Getriebes eines Nutzfahrzeuges.

Zum Testen neu entwickelter Antriebsmotore, zum Beispiel von Dieselbrennkraftmaschinen, werden regelmäßig Leistungsprüfstände eingesetzt. Mit einem solchen Leistungsprüfstand ist es möglich, repräsentative Zustände für den Antriebsmotor nachzubilden und zu analysieren. Dadurch können bestimmte Versuchstätigkeiten von der Straße auf den Prüfstand übertragen werden.

Bevor ein neuer Antriebsmotor jedoch endgültig für den Serieneinsatz freigegeben werden kann, ist es weiter erforderlich, den Antriebsmotor hinsichtlich seiner Abstimmung auf ein automatisiertes Getriebe, das dem Antriebsmotor nachgeschaltet ist und einen Bestandteil des Antriebsstranges des Fahrzeuges, insbesondere Nutzfahrzeuges, bildet, zu testen und zu optimieren. Sowohl der Antriebsmotor als auch das automatisierte Getriebe verfügen über eine jeweilige, elektronische Steuerung, die über zumindest eine Schnittstelle zusammenarbeiten. Eine solche Schnittstelle kann sich, muss sich aber nicht an internationalen Normen, wie zum Beispiel SAE 1939 -71, orientieren. Für die Tests und Optimierungen beim Zusammenwirken von Antriebsmotor und Getriebe sind Applikationen durch Versuchs- und Vergleichsfahrten mit einem realen Fahrzeug unerlässlich und verursachen relativ hohe Kosten. Nach dem heutigen Stand der Technik ist es somit nicht möglich, ein automatisiertes Schaltgetriebe in zum Beispiel einem Nutzfahrzeug zu betreiben, ohne dass das Getriebe aufwendig an den Antriebsmotor bzw. Antriebsstrang des Fahrzeugs angepasst werden muss.

Durch die DE 10 2005 057 809 A1 ist es bekannt, bei einem Verfahren zur Schaltsteuerung eines automatisierten Kraftfahrzeug-Schaltgetriebes Anpassungen an die jeweilige Betriebssituation vorzunehmen. Zu Beginn des Schaltvorganges wird mindestens ein den aktuellen Betriebszustand des Kraftfahrzeuges kennzeichnender Parameter und/oder ein den vorgesehenen Schaltvorgang kennzeichnender Schaltparameter erfasst und ausgewertet und es wird die dem Leerlaufmoment zugeordnete Einspritzmenge des Antriebsmotors abhängig von dem Auswertungsergebnis variabel an den Betriebszustand des Kraftfahrzeugs und/oder den Schaltvorgang angepasst.

Aus der DE 10 2008 054 802 A1 ist ein gattungsbildendes Verfahren bekannt. Hier erfolgt die Steuerung von Anfahr- und Schaltvorgängen in Abhängigkeit des Ansprechverhaltens des Verbrennungsmotors dergestalt, dass das aktuelle Ansprechverhalten des Verbrennungsmotors jeweils einem Motordynamik-Kennfeld entnommen wird, in dem das spontan abrufbare Maximalmoment des Verbrennungsmotors als Funktion des aktuellen Motormomentes und der aktuellen Motordrehzahl abgelegt ist. Steuerungsvorgänge, wie zum Beispiel die Bestimmung des Anfahrgangs und der Anfahrdrehzahl vor einem Anfahrvorgang oder die Ermittlung der schaltbaren Gänge vor einer Zuhochschaltung, erfolgen somit in Abhängigkeit von dem Maximalmoment des Verbrennungsmotors, das ausgehend von dem aktuellen Motormoment und der aktuellen Motordrehzahl spontan abrufbar ist.

Die Aufgabe der Erfindung besteht daher, ein Verfahren zur Ansteuerung eines automatisierten Getriebes, insbesondere eines automatisierten Getriebes eines Nutzfahrzeuges, zur Verfügung zu stellen, mittels dem ein Schaltpendeln auf der Basis des übermittelten Verlaufs des Antriebsmotordrehmomentes zuverlässig vermieden werden kann.

Diese Aufgabe wird gelöst mit den Merkmalen des unabhängigen Anspruchs 1. Bevorzugte Weiterbildungen und Ausgestaltungen sind Gegenstand der Unteransprüche.

Gemäß Anspruch 1 wird ein Verfahren zur Ansteuerung eines automatisierten Getriebes, das mit einem Antriebsmotor gekoppelt ist, vorgeschlagen, wobei einer Steuerung des automatisierten Getriebes über eine Schnittstelle Daten und/oder Signale zugeführt werden. Erfindungsgemäß ist vorgesehen, dass der Steuerung des automatisierten Getriebes bei Eintritt eines definierten Ereignisses ein zeitlich vorausschauender instationärer Verlauf des Antriebsmotordrehmomentes für eben dieses Ereignis übermittelt wird, so dass die Getriebesteuerung, d.h. die Steuerung des automatisierten Getriebes, auf der Basis dieser übermittelten Daten eine Getriebeschaltstrategie ermittelt und/oder vorgibt.

Der der Steuerung des automatisierten Getriebes erfindungsgemäß zur Verfügung gestellte erwartete, also zeitlich vorausschauende Verlauf bzw. Aufbau des Motordrehmomentes stellt eine wichtige Basis für einen optimal auszuführenden Schaltvorgang durch die Getriebesteuerungssoftware dar. Mit der erfindungsgemäßen Lösung wird eine wesentliche Vereinfachung der Applikation zwischen Getriebe und Antriebsmotor erzielt, da für definierte Ereignisse der Getriebesteuerung lediglich das einfach auf einem Prüfstand ermittelbare bzw. ermittelte Antriebsmotordrehmoment als Hauptgröße für die "Fahrzeugkraft" zur Verfügung gestellt werden muss. Mit der erfindungsgemäßen Lösung kann somit ein wesentlicher Teil der Applikationsarbeit einfach auf dem Prüfstand durchgeführt werden, so dass teure Versuchsfahrten eingespart werden können.

Bevorzugt wird der instationäre Motordrehmomentverlauf in Form von Kennlinien übermittelt und vorgegeben, wobei die Kennlinien für das jeweilige Ereignis motorenindividuell auf einem Prüfstand ermittelt werden

Als Ereignis wird bevorzugt ein Anfahrvorgang berücksichtigt. Für dieses Ereignis können am Prüfstand einfachst Kennlinien für wenigstens das Antriebsdrehmoment abgeleitet werden, so dass der Getriebesteuerung beim Erfassen eines Anfahrvorgangs ein zeitlich vorausschauender instationärer Verlauf des Antriebsmotordrehmomentes übermittelt werden kann, auf dessen Basis die Getriebesteuerung eine Getriebeschaltstrategie für den Anfahrvorgang ermittelt und/oder vorgibt.

Vorteilhaft ermittelt hierbei die Getriebesteuerung auf der Basis des übermittelten Verlaufs des Antriebsmotordrehmomentes eine Anfahrdrehzahl und/oder einen Anfahrgang.

Erfindungsgemäß wird als Ereignis eine Hochschaltung oder eine Rückschaltung des automatisierten Getriebes berücksichtigt. Für diese Ereignisse können am Prüfstand einfachst Kennlinien für wenigstens das Antriebsdrehmoment abgeleitet werden, so dass der Getriebesteuerung beim Erfassen eines derartigen Schaltvorgangs ein zeitlich vorausschauender instationärer Verlauf des Antriebsmotordrehmomentes übermittelt wird, auf dessen Basis die Getriebesteuerung eine Getriebeschaltstrategie für die Hoch- oder Rückschaltung ermittelt und/oder vorgibt. Erfindungsgemäß ermittelt die Getriebesteuerung zur Vermeidung eines Schaltpendelns auf der Basis des übermittelten Verlaufs des Antriebsmotordrehmomentes, ob eine Schaltung, d.h. ein Schaltvorgang, ausgelöst wird oder nicht, insbesondere ob das verfügbare Drehmoment für das Auslösen einer Schaltung, d.h. eines Schaltvorgangs, ausreicht, um ein definiertes Motorverhalten, insbesondere eine definierte Fahrzeugbeschleunigung, zu erzielen.

Weiter kann als Ereignis auch ein Schubzugwechsel oder ein Schleppbetrieb berücksichtigt werden. Auch für diese Ereignisse können am Prüfstand einfachst Kennlinien für wenigstens das Antriebsdrehmoment abgeleitet werden, so dass der Getriebesteuerung beim Erfassen eines Schubzugwechsels oder eines Schleppbetriebs ein zeitlich vorausschauender instationärer Verlauf des Antriebsmotordrehmomentes übermittelt werden kann, auf dessen Basis die Getriebesteuerung eine Getriebeschaltstrategie für den jeweiligen Schubzugwechsel oder den jeweiligen Schleppbetrieb ermittelt und/oder vorgibt. Dies kann zum Beispiel dergestalt erfolgen, dass die Getriebesteuerung auf der Basis des übermittelten Verlaufs des Antriebsmotordrehmomentes ermittelt, ob ein Wechsel zwischen Schub- und Zugbetrieb oder ein Wechsel in den Schleppbetrieb ausgelöst wird oder nicht. Beim Schleppbetrieb kann dann weiter die Motorbremse zugeschaltet werden.

Besonders bevorzugt ist eine Ausgestaltung, bei der der instationäre Motordrehmomentverlauf, d.h. der instationäre Verlauf des Antriebsmotordrehmoments, der Getriebesteuerung motorenindividuell in Abhängigkeit von der Auslegung der jeweiligen Abgasstufe, zum Beispiel als SCR-Abgasstufe (SCR = selektive katalytische Reduktion) oder als EURO-VI-Abgasstufe, um nur zwei Beispiele zu nennen, des jeweils mit dem automatisierten Getriebe gekoppelten Antriebsmotors vorgegeben wird.

Gemäß einer weiteren bevorzugten konkreten Ausgestaltung ist vorgesehen, dass der Getriebesteuerung für definierte Ereignisse wenigstens der instationäre Motordrehmomentverlauf mittels einer dem Antriebsmotor und dem automatisierten Getriebe übergeordneten oder mittels einer mit der Getriebesteuerung oder der Motorsteuerung gekoppelten, separaten Steuereinrichtung zugeführt wird, in der wenigstens ein ereignisbezogener Motordrehmomentverlauf abrufbar gespeichert ist.

Zusätzlich oder aber vor allem alternativ dazu, kann gemäß einer wenig bauteilintensiven, funktionsintegrierten Lösung aber auch vorgesehen sein, dass für definierte Ereignisse wenigstens der instationäre Motordrehmomentverlauf im Motorsteuergerät des jeweiligen Antriebsmotors abgespeichert ist, der der Getriebesteuerung über die Schnittstelle bei Erfassung und Eintritt eines definierten Ereignisses übermittelt wird.

In Verbindung mit beiden zuvor genannten Varianten kann weiter vorgesehen sein, dass der Getriebesteuerung oder einer Steuerung für den Antriebsmotor wenigstens der instationäre Motordrehmomentverlauf für definierte Ereignisse mittels einer EOL (End of Line) - Programmierung, das heißt einer Programmierung der Steuergeräte am Ende der Montagestraße, übermittelt wird.

Es wurde herausgefunden, dass praktisch alle im tatsächlichen Betrieb auftretenden Belastungen des Antriebsmotors, der im Nutzfahrzeug mit einem automatisierten Getriebe zusammenwirkt, sich auf die zuvor angegebenen Ereignisse (Anfahrvorgang, Hoch- und Rückschaltung, Schubzugwechsel, Schleppbetrieb) zurückführen lassen bzw. es ist davon auszugehen, dass die angegebenen Ereignisse die höchsten Anforderungen bezüglich der Motordynamik darstellen. Soweit zeitlich vorausschauende Verläufe bezüglich des Motormomentes für die vorab dargestellten Ereignisse für die Getriebesoftware zugänglich gemacht werden können, so gilt dies auch für andere Situationen im praktischen Einsatz. Ferner ist es dem Grund nach auch möglich, andere zeitlich vorausschauende Verläufe anderer technischer Größen des Antriebsmotors, wie Einspritzmengen, Ladedrücke oder auch Abgasrückführungsrate (AGR), zur Verfügung zu stellen.

Bei der Vorrichtung, die zur Ausführung des erfindungsgemäßen Verfahrens verwendet wird und zur Ansteuerung eines mit einem Antriebsmotor gekoppelten automatisierten Getriebes dient, ist eine Schnittstelle vorgesehen, mittels der einer Steuerung des automatisierten Getriebes Daten und/oder Signale zuführbar sind. In einem Steuergerät der Vorrichtung oder in einem mit der Vorrichtung gekoppelten Steuergerät sind instationäre und/oder dynamische Verläufe mindestens des Motordrehmomentes für wenigstens ein definiertes Ereignis implementiert und an die Steuerung des automatischen Getriebes weiterleitbar.

Eine derartige Steuerung kann, wie zuvor bereits dargelegt, durch abgelegte Kennlinien der typischen instationären und/oder dynamischen Verläufe des Motordrehmoments bei einzelnen Ereignissen (wie zum Beispiel Anfahrvorgang, Hochschaltung oder Rückschaltung, Schubzugwechsel, Schleppbetrieb) über zum Beispiel das üblicherweise verwendete Netzwerk CAN (Control Area Network) der Steuerung des automatisierten Getriebes die zu erwartenden Verläufe bzw. die einer Prognose entsprechenden Verläufe wenigstens des Motordrehmomentes zur Verfügung stellen. Damit geht auf jeden Fall eine Optimierung des Schaltvorganges des automatisierten Getriebes einher. Es liegt auch im Rahmen der Erfindung, dass andere Motorgrößen als Prognose der Getriebesteuerung bzw. deren Software zur Verfügung gestellt werden können. Die Implementierung solcher Verläufe kann durch einzelne Datensätze, die ein- oder mehrdimensional gespeichert sind, zeitabhängig, wie durch einen Software-Zähler, abgerufen werden. Jedoch ist es auch möglich, eine gewonnene Bildungsgesetzmäßigkeit, wie zum Beispiel eine Formel mit Zeitabhängigkeit, abzurufen und auszugeben.

Mit einem Prüfstand können Ereignisse, bevorzugt ein Anfahrvorgang, eine Hoch- oder Rückschaltung, ein Schubzugwechsel oder ein Schleppbetrieb, simuliert werden. Dem Prüfstand ist nur der zu untersuchende Antriebsmotor, im Regelfall im Nutzfahrzeug eine Dieselbrennkraftmaschine, zugeordnet. Die Abtriebswelle des Antriebsmotors ist drehfest mit einer generatorisch und/oder motorisch betreibbaren elektrischen Maschine, wie zum Beispiel einem Drehstromasynchronmotor, verbunden. Das Netzwerk des Nutzfahrzeuges wird durch ein entsprechendes Netzwerk des Prüfstandes ersetzt. Die Steuerung des Antriebsmotors kommuniziert mit dem Netzwerk des Prüfstandes. Bei jedem auf dem Prüfstand simulierten Ereignis sind die zeitabhängigen Verläufe technischer Größen des Antriebsmotors erfassbar bzw. speicherbar. Damit können diese erfassten technischen Größen, insbesondere das Motordrehmoment und im Besonderen hinsichtlich deren zeitlichem Verlauf, auslesbar für eine Implementierung für die Motorsteuerung zur Verfügung gestellt werden. Bei dem Prüfstand ist wenigstens ein Prüfprogramm vorgesehen, um reale Belastungen des Nutzfahrzeuges mit dessen automatisierten Getriebe in Bezug auf den Antriebsmotor zu simulieren und zugehörig zu den simulierten Belastungsereignissen mindestens den zeitlichen Verlauf des Motormomentes speicherbar und auslesbar zu machen.

Die Erfindung wird nachfolgend beispielhaft und in keinster Weise einschränkend unter Bezugnahme auf Figuren weiter erläutert. Es zeigen:
- Fig. 1: ein schematisch dargestelltes Nutzfahrzeug mit den Baugruppen des Antriebsstranges,
- Fig. 2: schematisch einen Verbund von Motorsteuergerät mit dem Getriebesteuergerät und anderer Geräte des zugrunde gelegten Nutzfahrzeuges,
- Fig. 3: einen Prüfstand zur Simulation von Vorgängen in schematischer Darstellung,
- Fig. 4: Prüfzyklen, die mit dem Prüfstand durchgeführt werden, wobei
a) den Teilzyklus Anfahren,
b) den Teilzyklus Hochschaltung,
c) den Teilzyklus Schubzugwechsel,
d) den Teilzyklus Rückschaltung, betreffen, und
- Fig. 5: die zeitabhängigen Kennlinien für das Motormoment, und zwar
a) für das Anfahren,
b) für Hochschaltungen,
c) für den Schubzugwechsel und
d) für Rückschaltungen.

Das Zusammenwirken eines Antriebsmotors mit einem automatisierten Schaltgetriebe kann beispielsweise aus der DE 198 02 736 A1 entnommen werden.

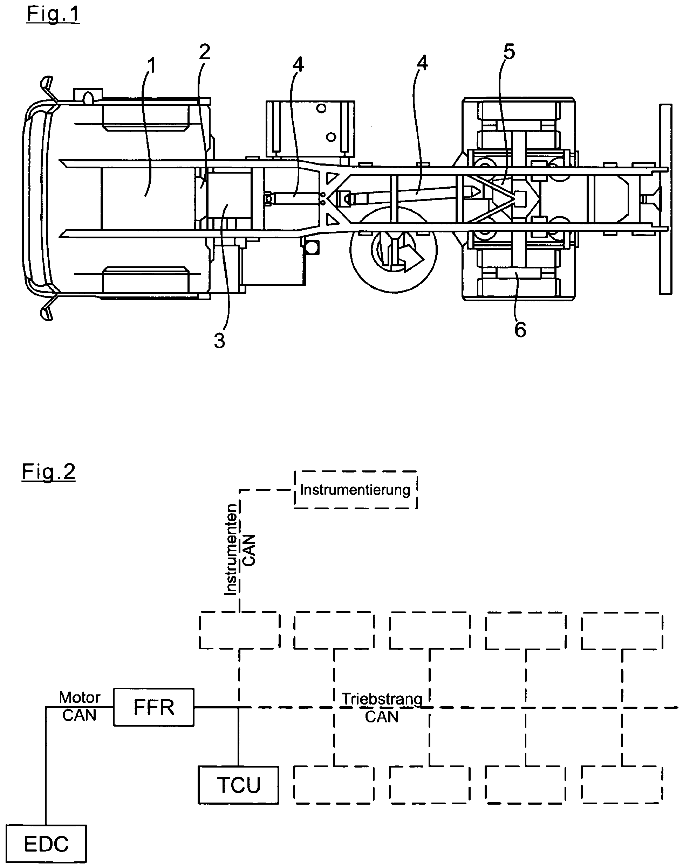

Daneben wird anhand von Fig. 1 zusammenfassend ein schematisch gezeichnetes Nutzfahrzeug gezeigt, das als Baugruppen des Antriebsstranges den Motor 1, die Kupplung 2, das automatisierte Getriebe 3, die Gelenkwellen 4, das Achsgetriebe 5 sowie das Nabengetriebe 6 aufweist.

Im vorliegenden Fall ist dem Motor 1 ein Steuergerät EDC und dem Getriebe 3 samt Kupplung 2 ein Steuergerät TCU zugeordnet. Ein dazwischen geschalteter Fahrzeugführungsrechner FFR ist über ein Netzwerk CAN mit dem Steuergerät EDC und dem Steuergerät TCU verbunden, wie dies auch aus Fig. 2 zu ersehen ist. Andere in Fig. 2 gestrichelt eingetragene Blöcke ohne Kurzbezeichnungen stellen beispielhaft andere Geräte des Nutzfahrzeuges dar, die für die zu erläuternde Erfindung jedoch nicht von weiterem Interesse sind.

Der Datenaustausch zwischen dem Steuergerät EDC und dem Steuergerät TCU erfolgt durch zahlreiche, im Fachgebiet festgelegte Daten und/oder Signale, wie zum Beispiel dem Schnittstellenprotokoll nach SAE 1939-71. Bei einer spezifischen Zuordnung von einem Steuergerät EDC des bestimmten Antriebsmotors und einem Steuergerät eines bestimmten automatisierten Getriebes können jedoch noch weitere Signale hinzutreten bzw. es kann auch von einzelnen Signalen kein Gebrauch gemacht werden.

Bei dem Datenaustausch zwischen dem Steuergerät ECD und dem Steuergerät TCU sind vor allem die Signale, die das aktuell vom Motor erzeugte Drehmoment und die aktuelle Drehzahl betreffen, von Bedeutung. Diese werden vom Motorsteuergerät EDC aus gesendet. Mit diesen Daten kann das Getriebesteuergerät für dessen Betrieb wichtige Größen berechnen und verarbeiten.

Umgekehrt kann auch das Getriebesteuergerät TCU Botschaften an das Motorsteuergerät senden und dabei den Ab- bzw. Aufbau des Motormomentes sowie das Ein- und Ausschalten der Motorbremse beeinflussen. Bei Schaltungen des automatisierten Getriebes ist es notwendig, so schnell wie möglich das Motormoment abzubauen und nach erfolgtem Gangwechsel das Moment definiert entsprechend der angestrebten Schaltdynamik aufzubauen. Bei Hochschaltungen kann es bei zu großem Massenträgheitsmoment nötig sein, die Motorbremse zu aktivieren, um möglichst schnell die für die Synchronisation notwendige Drehzahl zu erreichen. Über das nachgefragte Momentensignal/Momentenbegrenzungssignal in der Botschaft "Torque/Speed Control" kann das Getriebe das Motormoment beeinflussen. Es wird ein prozentualer Wert zum Motorbezugsmoment ausgesandt, der jedoch zunächst vom Fahrzeugführungsrechner geprüft wird, ehe er als angefordertes Moment an den Motor bzw. an dessen Steuergerät weitergegeben wird.

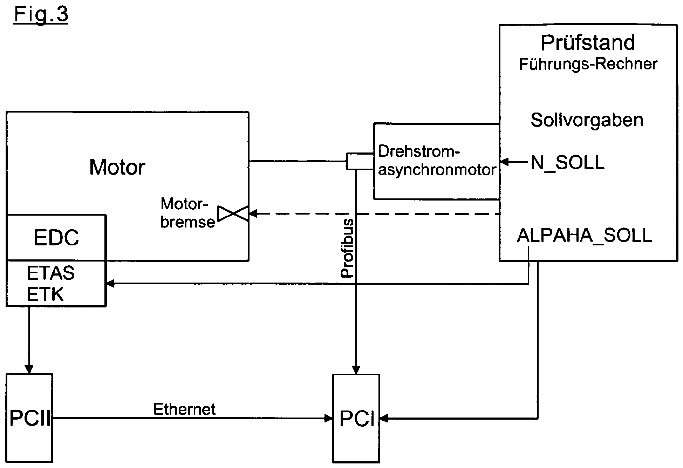

Mit Fig. 3 ist der zum Einsatz gelangende Prüfstand dargestellt. Bei diesem Prüfstand wird als zu prüfendes Objekt alleinig der Antriebsmotor mit seiner Steuerung EDC untersucht. Die im praktischen Betrieb vorliegenden Momentanforderungen werden bezogen auf die Motorwelle durch einen Elektromotor mit Nebenschlusscharakteristik, wie ein Drehstromasynchronmotor, der letztlich auch generatorisch betreibbar ist, erzeugt, der mit einem Prüfstandsrechner und dem Motorsteuergerät EDC in Verbindung steht. Die eigentlich im praktischen Betrieb von dem Getriebesteuergerät abgesandten Botschaften bzw. gesendeten Signale werden ebenfalls durch den Prüfstandsrechner selbst oder durch hinzukommende kleinere Rechner, wie PC I und PC II simuliert und an das Steuergerät EDC über ein Netzwerk, wie Ethernet, das das im praktischen Einsatz vorliegende Netzwerk CAN nachbildet, gesendet. Botschaften bzw. Signale des Steuergerätes EDC werden auch über das Netzwerk Ethernet abgeschickt zur übergeordneten Auswertung durch den Prüfstandsrechner.

Der beschriebene Prüfstand ist im Rahmen der Erfindung insbesondere für die Betriebsart (Zyklus) "dynamisch" von besonderer Bedeutung. Es kann somit das dynamische Verhalten des Antriebsmotors, meist eines Dieselmotors, untersucht werden. Zu den zu simulierenden Vorgängen, bei denen das dynamische Verhalten relevant ist, zählen insbesondere Anfahrvorgänge, Hoch- und Rückschaltungen sowie ein Wechsel aus dem Schub- in den Zugbetrieb. Zielsetzung bei den simulierten Abläufen im Versuchs- bzw. Prüfbetrieb ist es, Informationen zu erhalten, wie sich generell der Aufbau des Drehmomentes aus Sicht des Getriebes bei typischen Funktionen des Getriebes verhält. Die insbesondere im Steuergerät TCU des Getriebes implementierte Software kann dann mit diesen Informationen, bevor sie eine Schaltung auslöst oder einen Anfahrgang einlegt, prüfen, ob der Verlauf und die Höhe des Drehmomentes in dem vorgewählten Gang ausreicht, um Fehlschaltungen zu vermeiden.

Der Prüfzyklus "dynamisch" geht von realen Messungen am Fahrzeug aus. Es wurden also, um dies nochmals zu verdeutlichen, repräsentative Schalt- und Anfahrvorgänge ausgewählt und diese für die Versuche auf dem Motorprüfstand durch dafür ausgelegte technische Programme angepasst. Ein Prüfzyklus besteht aus vier aufeinander folgenden Einzelzyklen. Diese sind insbesondere vier Anfahrvorgänge, sechs Hochschaltungen, zwei Schubzugwechsel und fünf Rückschaltungen.

Bezogen auf die Arbeitsweise mit dem Prüfstand werden Drehmoment- Vorgaben und vorgegebene Drehzahlverläufe vor und nach dem Kraftschluss der Kupplung simuliert. Die Gradienten der Drehzahlverläufe wurden ebenfalls aus Messungen mit einem realen Fahrzeug übernommen.

Anfahrvorgänge sind ein Kompromiss aus möglichst hohem Anfahrgang und dem Verschleiß an der Kupplung. Beim Anfahrvorgang muss ein passender Gang gewählt werden, damit das Fahrzeug insbesondere an einer Steigung unter Berücksichtigung des dynamischen Lastaufbaus anfahren kann.

Beim Anfahrvorgang wird das Signal "Engine Requested Torque/Torque Limit" über die Software des Getriebes angefordert.

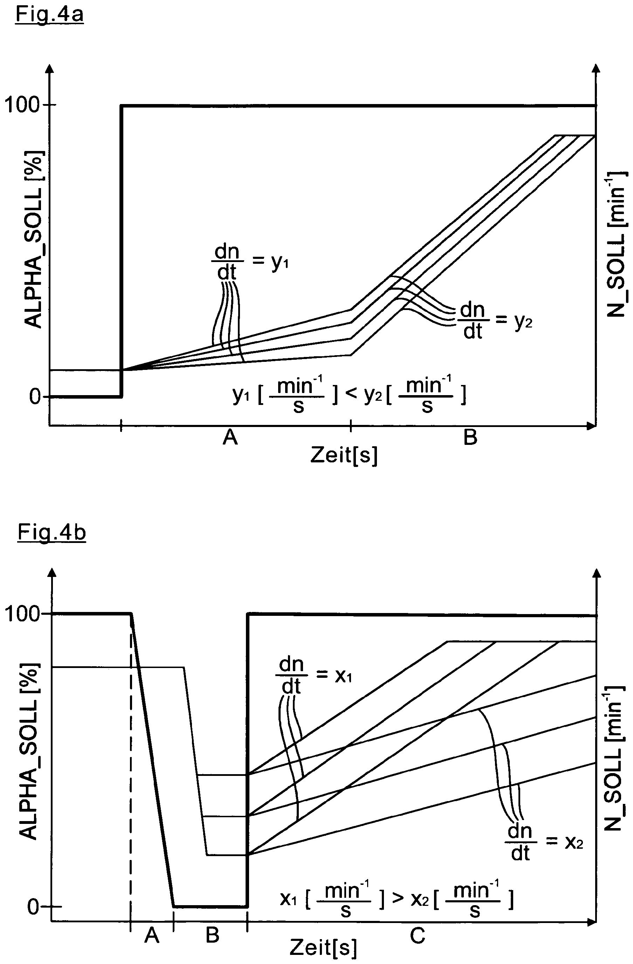

Im Übrigen ist der Teilzyklus "Anfahren" in Fig. 4a dargestellt. Die Abszisse ist unterteilt in den Bereich A für den Momentenaufbau und den simulierten Anfahrvorgang. Der Bereich B zeigt den Kraftschluss und den simulierten Fahrbetrieb. Die linke Ordinate zeigt mit ALPHA_SOLL das vorgegebene, normierte Drehmoment. Entlang der rechten Ordinate sind die Drehzahlen N_SOLL aufgetragen.

Hochschaltungen zeichnen sich dadurch aus, dass ausgehend von einem hohen Drehzahlniveau durch die Änderung der Übersetzung des Getriebes über den Gangsprung in ein niedrigeres Drehzahlniveau geschaltet wird. Im Übrigen ist der Teilzyklus "Hochschaltung" in Fig. 4b dargestellt. Die Abszisse ist unterteilt. Der Bereich A zeigt den Lastabbau. Der Bereich B zeigt die Synchronisation und den Gangwechsel. Der Bereich C zeigt den Momentenaufbau und den simulierten Fahrbetrieb.

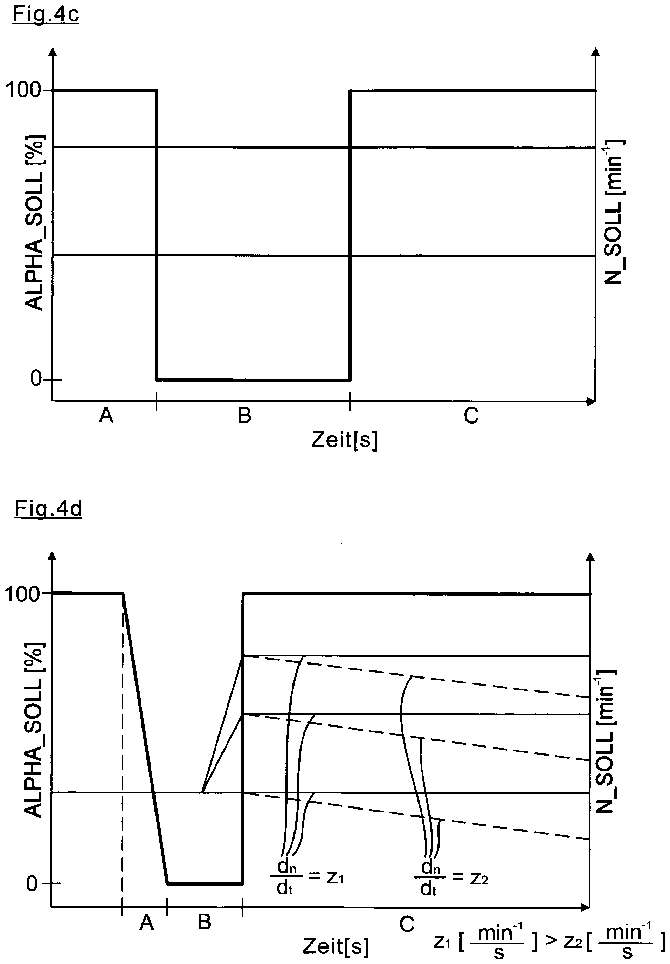

Beim Teilzyklus "Schubzugwechsel" wird eine definierte Drehzahl zugrunde gelegt, dann die Drehmomentvorgabe auf einen vorgegebenen Wert reduziert und sodann wieder auf einen weiteren vorgegebenen Wert, zum Beispiel 100%, angehoben, also in den Zugbetrieb gewechselt. Es wird hierzu auf die Fig. 4c verwiesen. Die Abszisse ist unterteilt. Der Bereich A zeigt den Zugbetrieb. Der Bereich B zeigt den Schubbetrieb. Der Bereich C zeigt den Zugbetrieb.

Bei Rückschaltungen schaltet das Getriebe ausgehend von einer niedrigen Motordrehzahl in ein höheres Drehzahlniveau. Es wird auf die Fig. 4d verwiesen. Die Abszisse ist unterteilt. Der Bereich A zeigt den Lastabbau. Der Bereich B zeigt die Synchronisation und den Gangwechsel. Der Bereich C zeigt den Momentenaufbau und den simulierten Fahrbetrieb.

Unter Berücksichtigung der Prüfstandsversuche wurde herausgefunden, dass der zeitliche Aufbau des Drehmomentes, wie es sich bei typischen Funktionen des Getriebes verhält, dem Getriebe nicht bekannt ist und auch von der Software des Motorsteuergerätes nicht betrachtet wird. Es ist jedoch erforderlich, dass das Getriebe bzw. dessen Steuerung zum Beispiel bei der Anfahrdrehzahlberechnung weiß, bei welcher Drehzahl der Motor welches Drehmoment abgeben kann. Weiter müssen, um für die Schaltungsüberwachung die Fahrzeugzugkraft mit einzubeziehen, die Drehzahl- und Momentverläufe, wie sie bei Schaltungen ablaufen, der Steuerung bekannt sein.

Es wurde daher untersucht, welche Drehmomentverläufe sich für die vorab beschriebenen Teilzyklen, nämlich simulierter "Anfahrvorgang", simulierte "Hochschaltung", simulierte "Rückschaltung", simulierter "Schubzugwechsel" für bestimmte Motoren als Prüflinge ergeben. Dabei wurden zudem andere Motorgrößen, wie Saugmoment, Einspritzmengen, Ladedrücke, AGR (Abgasrückführungs)-Rate mit aufgezeichnet.

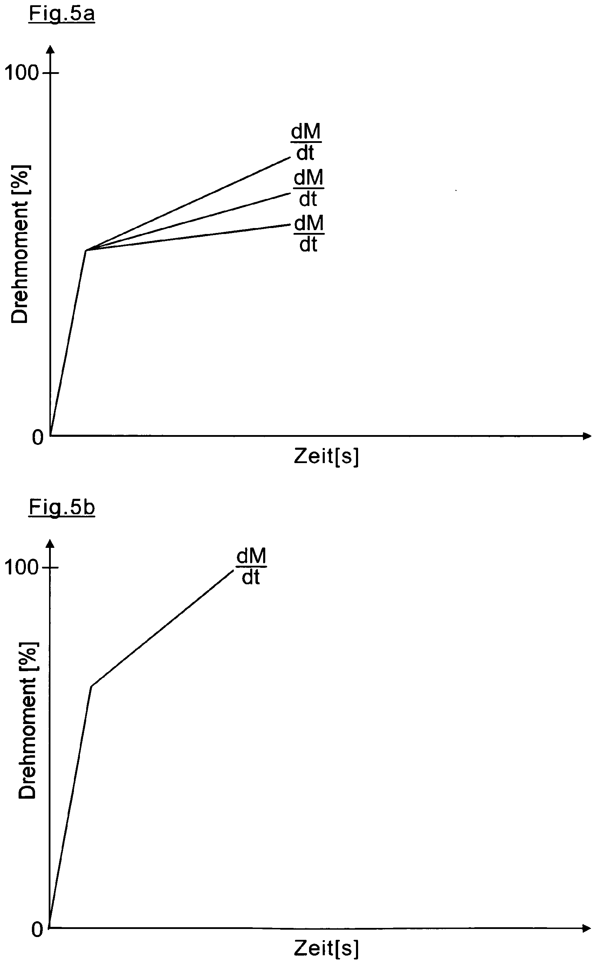

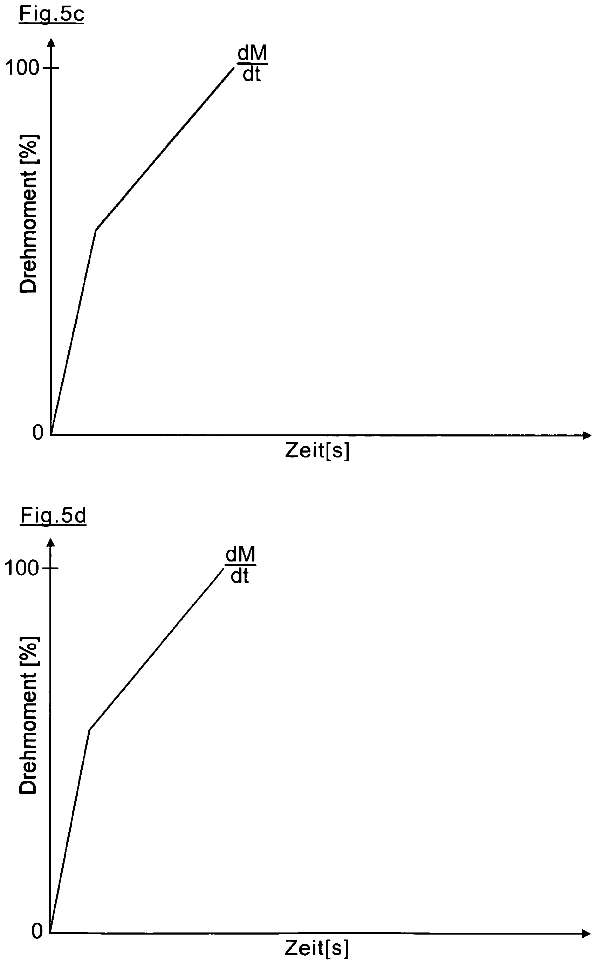

Im Ergebnis konnte festgestellt werden, dass ein nachweisbarer zeitlicher Verzug zwischen Drehmomentanforderung und Drehmomentaufbau vorliegt. Dabei konnte ein wiederholbares Verhalten bezüglich des Drehmomentaufbaues erkannt werden. Der Drehmomentaufbau lässt sich bis zum Erreichen der Volllast über einen Gradienten, ausgehend vom Saugmoment - also dem Motormoment ohne Aufladung - beschreiben, wenn auch das Volllastdrehmoment sich von seiner Höhe her im Betrieb des Fahrzeuges ändern kann. Der Gradient des Drehmomentes hingegen wird über diese Begrenzungen nicht beeinflusst und behält seine Gültigkeit. Es wird im Übrigen auf erhaltene Kennlinien über den Momentenverlauf bei Anfahren, vergleiche Fig. 5a bei Hochschaltungen, vergleiche Fig. 5b, beim Schubzugwechsel, vergleiche Fig. 5c und bei Rückschaltungen, vergleiche Fig. 5d bei einem bestimmten Motortyp als Prüfling verwiesen.

In Fig. 5a ist der Drehmomentaufbaugradient für verschiedene Drehzahlen dargestellt. Aus Fig. 5b lässt sich entnehmen, dass der Drehzahlaufbaugradient ein bestimmter Wert für alle untersuchten Hochschaltungen bis zum Volllastdrehmoment ist. Aus Fig. 5c lässt sich entnehmen, dass der Drehzahlaufbaugradient ebenfalls ein bestimmter Wert für alle Schubzugwechsel bis zum Volllastdrehmoment ist. Aus Fig. 5d lässt sich schließlich entnehmen, dass der Drehzahlaufbaugradient ebenfalls wiederum ein bestimmter Wert für alle Rückschaltungen bis zum Volllastdrehmoment ist.

Zu den Ergebnissen, die unverkennbar zu einer Beschreibung der Motordynamik geführt haben, ist zwar zu bemerken, dass der Drehzahlaufbaugradient (im Zusammenhang mit dem Saugmoment) eine Abhängigkeit vom Ladedruck vor der Schaltung des automatisierten Getriebes, von der Schaltungsdauer, der Einspritzstrategie, der Zieldrehzahl und des Drehzahlgradienten aufweist. Auch wenn diese Abhängigkeiten im realen Fahrbetrieb weiter zu streuen vermögen, so liegen durch die Erfindung Kennlinien vor, die die zugrundeliegenden Abhängigkeiten für die Bereitstellung an das Getriebesteuergerät möglich machen. Die gespeicherten Werte, die auch mehrdimensional in einem Speicherbereich einer grundsätzlich beliebigen Steuer- oder Speichereinrichtung abspeicherbar sind, lassen sich über zum Beispiel über eine Zählfunktion zeitabhängig auslesen und als Botschaft im Sinne einer Prognose der Getriebesteuerung zur Verfügung stellen.

Insgesamt wurde erkannt, dass Hochschaltungen und Schubwechsel Extremzustände sind, deren Beherrschung auch das Beherrschen anderer Betriebszustände im realen Fahrbetrieb möglich werden lässt. Hochschaltungen werden von einem sehr hohen Ladedruckniveau ausgehend ausgelöst und es wurde auch die Schaltdauer sehr kurz zugrunde gelegt. Dies bedeutet, dass die Kennlinie, die aus den Hochschaltungen abgeleitet wurde, die maximal mögliche Dynamik des Drehmomentaufbaues darstellt. Im Gegensatz dazu stellen die Schubzugwechsel, die durch einen niedrigen Ladedruck gekennzeichnet sind, für die Dynamik des Drehmomentaufbaues den minimal möglichen Fall dar. Das heißt, dass alle Verläufe des Drehmomentes zwischen diesen beiden Kennlinien liegen müssen. Ein mittleres Ladedruckniveau und damit ein mittleres Saugmoment und Drehzahlaufbaugradienten wird durch die Kennlinien aus den Rückschaltungen repräsentiert.

## Patentansprüche

1. Verfahren zur Ansteuerung eines automatisierten Getriebes, insbesondere eines automatisierten Getriebes eines Nutzfahrzeuges, das mit einem Antriebsmotor gekoppelt ist, wobei einer Steuerung des automatisierten Getriebes über eine Schnittstelle Daten und/oder Signale zugeführt werden, **dadurch gekennzeichnet,**
**dass** der Steuerung des automatisierten Getriebes bei Eintritt eines definierten Ereignisses ein zeitlich vorausschauender instationärer Verlauf des Antriebsmotordrehmomentes für dieses Ereignis übermittelt wird, so dass die Steuerung des automatisierten Getriebes auf der Basis dieser übermittelten Daten eine Getriebeschaltstrategie ermittelt und/oder vorgibt,
**dass** als Ereignis eine Hochschaltung oder eine Rückschaltung des automatisierten Getriebes berücksichtigt wird und der Steuerung des automatisierten Getriebes beim Erfassen eines derartigen Schaltvorgangs ein zeitlich vorausschauender instationärer Verlauf des Antriebsmotordrehmomentes übermittelt wird, auf dessen Basis die Steuerung des automatisierten Getriebes eine Getriebeschaltstrategie für die Hoch- oder Rückschaltung ermittelt und/oder vorgibt, und
**dass** die Steuerung des automatisierten Getriebes zur Vermeidung eines Schaltpendelns auf der Basis des übermittelten Verlaufs des Antriebsmotordrehmomentes ermittelt, ob eine Schaltung ausgelöst wird oder nicht.

2. Verfahren nach Anspruch 1, **dadurch gekennzeichnet, dass** als Ereignis ein Anfahrvorgang berücksichtigt wird und der Steuerung des automatisierten Getriebes beim Erfassen eines Anfahrvorgangs ein zeitlich vorausschauender instationärer Verlauf des Antriebsmotordrehmomentes übermittelt wird, auf dessen Basis die Steuerung des automatisierten Getriebes eine Getriebeschaltstrategie für den Anfahrvorgang ermittelt und/oder vorgibt.

3. Verfahren nach Anspruch 2, **dadurch gekennzeichnet, dass** die Steuerung des automatisierten Getriebes auf der Basis des übermittelten Verlaufs des Antriebsmotordrehmomentes eine Anfahrdrehzahl und/oder einen Anfahrgang ermittelt.

4. Verfahren nach einem der vorhergehenden Ansprüche, **dadurch gekennzeichnet, dass** als Ereignis ein Schubzugwechsel oder ein Schleppbetrieb berücksichtigt wird und der Steuerung des automatisierten Getriebes beim Erfassen eines Schubzugwechsels oder eines Schleppbetriebs ein zeitlich vorausschauender instationärer Verlauf des Antriebsmotordrehmomentes übermittelt wird, auf dessen Basis die Steuerung des automatisierten Getriebes eine Getriebeschaltstrategie für den jeweiligen Schubzugwechsel oder den jeweiligen Schleppbetrieb ermittelt und/oder vorgibt.

5. Verfahren nach einem der vorhergehenden Ansprüche, **dadurch gekennzeichnet, dass** der Steuerung des automatisierten Getriebes der instationäre Motordrehmomentverlauf motorenindividuell in Abhängigkeit von der Auslegung der jeweiligen Abgasstufe des jeweils mit dem automatisierten Getriebe gekoppelten Antriebsmotors vorgegeben wird.

6. Verfahren nach einem der vorhergehenden Ansprüche, **dadurch gekennzeichnet, dass** der instationäre Motordrehmomentverlauf in Form von Kennlinien übermittelt und vorgegeben wird, wobei die Kennlinien für das jeweilige Ereignis motorenindividuell auf einem Prüfstand ermittelt werden.

7. Verfahren nach einem der vorhergehenden Ansprüche, **dadurch gekennzeichnet, dass** der Steuerung des automatisierten Getriebes für definierte Ereignisse wenigstens der instationäre Motordrehmomentverlauf mittels einer dem Antriebsmotor und dem automatisierten Getriebe übergeordneten oder mittels einer mit der Steuerung des automatisierten Getriebes oder der Motorsteuerung gekoppelten, separaten Steuereinrichtung zugeführt wird, in der wenigstens ein ereignisbezogener Motordrehmomentverlauf abrufbar gespeichert ist.

8. Verfahren nach einem der vorhergehenden Ansprüche, **dadurch gekennzeichnet, dass** über eine Schnittstelle Signale zwischen einer Steuerung eines Antriebsmotors und der Steuerung des automatisierten Getriebes übertragen werden, wobei für definierte Ereignisse wenigstens der instationäre Motordrehmomentverlauf im Motorsteuergerät des jeweiligen Antriebsmotores abgespeichert ist, der der Steuerung des automatisierten Getriebes über die Schnittstelle bei Erfassung und Eintritt eines definierten Ereignisses übermittelt wird.

9. Verfahren nach einem der vorhergehenden Ansprüche, **dadurch gekennzeichnet, dass** der Steuerung des automatisierten Getriebes oder einer Steuerung für den Antriebsmotor wenigstens der instationäre Motordrehmomentverlauf für definierte Ereignisse mittels einer EOL (End of Line) - Programmierung übermittelt wird.

## Claims

1. Method for actuating an automated gearbox, in particular an automated gearbox of a utility vehicle that is coupled to a drive engine, wherein a controller of the automated gearbox is supplied with data and/or signals via an interface, **characterized**
**in that** occurrence of a defined event results in a time-predictive nonstationary characteristic of the drive engine torque for this event being transmitted to the controller of the automated gearbox, so that the controller of the automated gearbox ascertains and/or prescribes a gearbox shift strategy on the basis of these transmitted data,
**in that** the event heeded is an upward shift or a downward shift of the automated gearbox, and detection of such a shift process results in a time-predictive nonstationary characteristic of the drive engine torque being transmitted to the controller of the automated gearbox, on the basis of which characteristic the controller of the automated gearbox ascertains and/or prescribes a gearbox shift strategy for the upward or downward shift, and
**in that** the controller of the automated gearbox avoids shifting to and fro by taking the transmitted characteristic of the drive engine torque as a basis for ascertaining whether or not a shift is triggered.

2. Method according to Claim 1, **characterized in that** the event heeded is a starting process, and detection of a starting process results in a time-predictive nonstationary characteristic of the drive engine torque being transmitted to the controller of the automated gearbox, on the basis of which characteristic the controller of the automated gearbox ascertains and/or prescribes a gearbox shift strategy for the starting process.

3. Method according to Claim 2, **characterized in that** the controller of the automated gearbox takes the transmitted characteristic of the drive engine torque as a basis for ascertaining a starting engine speed and/or a starting gear.

4. Method according to one of the preceding claims, **characterized in that** the event heeded is a push-pull change or a towing mode, and detection of a push-pull change or of a towing mode results in a time-predictive nonstationary characteristic of the drive engine torque being transmitted to the controller of the automated gearbox, on the basis of which characteristic the controller of the automated gearbox ascertains and/or prescribes a gearbox shift strategy for the respective push-pull change or the respective towing mode.

5. Method according to one of the preceding claims, **characterized in that** the nonstationary engine torque characteristic is prescribed for the controller of the automated gearbox in engine-individual fashion on the basis of the design of the respective exhaust stage of the drive engine respectively coupled to the automated gearbox.

6. Method according to one of the preceding claims, **characterized in that** the nonstationary engine torque characteristic is transmitted and prescribed in the form of characteristic curves, wherein the characteristic curves for the respective event are ascertained in engine-individual fashion on a test bench.

7. Method according to one of the preceding claims, **characterized in that** at least the nonstationary engine torque characteristic is supplied to the controller of the automated gearbox for defined events by means of a separate control device that is superordinate to the drive engine and the automated gearbox or by means of a separate control device that is coupled to the controller of the automated gearbox or the engine controller, said control device storing at least one event-related engine torque characteristic in retrievable fashion.

8. Method according to one of the preceding claims, **characterized in that** an interface is used to transmit signals between a controller of a drive engine and the controller of the automated gearbox, wherein at least the nonstationary engine torque characteristic is stored in the engine control unit of the respective drive engine for defined events, said engine torque characteristic being transmitted to the controller of the automated gearbox via the interface when a defined event is detected and occurs.

9. Method according to one of the preceding claims, **characterized in that** at least the nonstationary engine torque characteristic is transmitted to the controller of the automated gearbox or a controller for the drive engine for defined events by means of an EOL (End of Line) programming.

## Revendications

1. Procédé de commande d'une boîte de vitesses automatisée, notamment d'une boîte de vitesses automatisée d'un véhicule utilitaire, qui est couplée à un moteur de propulsion, des données et/ou des signaux étant acheminés à une commande de la boîte de vitesses automatisée par le biais d'une interface, **caractérisé en ce**
**que** lorsqu'un événement défini survient, une courbe non stationnaire prévisionnelle dans le temps du couple du moteur de propulsion est communiquée à la commande de la boîte de vitesses automatisée pour cet événement, de sorte que la commande de la boîte de vitesses automatisée détermine et/ou prédéfinit une stratégie de changement de rapport en se basant sur ces données communiquées,
**que** l'événement pris en compte est un passage à un rapport supérieur ou un rétrogradage de la boîte de vitesses automatisée et une courbe non stationnaire prévisionnelle dans le temps du couple du moteur de propulsion est communiquée à la commande de la boîte de vitesses automatisée lors de la détection d'une telle opération de changement de rapport, sur la base de laquelle la commande de la boîte de vitesses automatisée détermine et/ou prédéfinit une stratégie de changement de rapport pour le passage à un rapport supérieur ou un rétrogradage, et
**que** la commande de la boîte de vitesses automatisée, en vue d'éviter une alternance de changements de rapport, détermine, sur la base de la courbe communiquée du couple du moteur de propulsion, si un changement de rapport sera déclenché ou non.

2. Procédé selon la revendication 1, **caractérisé en ce que** l'événement pris en compte est une manoeuvre de démarrage et, lors de la détection d'une manoeuvre de démarrage, une courbe non stationnaire prévisionnelle dans le temps du couple du moteur de propulsion est communiquée à la commande de la boîte de vitesses automatisée, sur la base de laquelle la commande de la boîte de vitesses automatisée détermine et/ou prédéfinit une stratégie de changement de rapport pour la manoeuvre de démarrage.

3. Procédé selon la revendication 2, **caractérisé en ce que** la commande de la boîte de vitesses automatisée détermine une vitesse de rotation de démarrage et/ou un rapport de démarrage sur la base de la courbe communiquée du couple du moteur de propulsion.

4. Procédé selon l'une des revendications précédentes, **caractérisé en ce que** l'événement pris en compte est un changement de propulsion en traction ou un régime de remorquage et, lors de la détection d'un changement de propulsion en traction ou d'un régime de remorquage, une courbe non stationnaire prévisionnelle dans le temps du couple du moteur de propulsion est communiquée à la commande de la boîte de vitesses automatisée, sur la base de laquelle la commande de la boîte de vitesses automatisée détermine et/ou prédéfinit une stratégie de changement de rapport pour le changement de propulsion en traction respectif ou le régime de remorquage respectif.

5. Procédé selon l'une des revendications précédentes, **caractérisé en ce que** la courbe du couple du moteur non stationnaire est prédéfinie pour la commande de la boîte de vitesses automatisée individuellement pour le moteur en fonction de la conception de l'étage d'échappement respectif du moteur de propulsion couplé respectivement à la boîte de vitesses automatisée.

6. Procédé selon l'une des revendications précédentes, **caractérisé en ce que** la courbe du couple du moteur non stationnaire est communiquée et prédéfinie sous la forme de courbes caractéristiques, les courbes caractéristiques pour l'événement respectif étant déterminées individuellement pour le moteur sur un banc d'essais.

7. Procédé selon l'une des revendications précédentes, **caractérisé en ce qu'**au moins la courbe du couple du moteur non stationnaire est acheminée à la commande de la boîte de vitesses automatisée pour des événements définis au moyen d'un dispositif de commande séparé, auquel sont subordonnés le moteur de propulsion et la boîte de vitesses automatisée ou qui est connecté à la commande de la boîte de vitesses automatisée ou à la commande de moteur, dans lequel est mémorisée de manière invocable l'au moins une courbe de couple de moteur rapportée aux événements.

8. Procédé selon l'une des revendications précédentes, **caractérisé en ce que** des signaux sont transmis entre une commande d'un moteur de propulsion et la commande de la boîte de vitesses automatisée par le biais d'une interface, au moins la courbe de couple de moteur non stationnaire, qui est communiquée à la commande de la boîte de vitesses automatisée par le biais d'une interface en cas de détection et de survenance d'un événement défini, étant mémorisée dans la commande de moteur du moteur de propulsion respectif pour des événements définis.

9. Procédé selon l'une des revendications précédentes, **caractérisé en ce qu'**au moins la courbe de couple de moteur non stationnaire est communiquée à la commande de la boîte de vitesses automatisée ou à une commande pour le moteur de propulsion pour des événements définis au moyen d'une programmation en fin de ligne (EOL - End of Line).
